# EUROPEAN PATENT SPECIFICATION

(11) **EP 2 558 795 B1**
(45) Date of publication and mention of the grant of the patent: **24.09.2014**
(21) Application number: 11727514.9
(22) Date of filing: 13.04.2011
(51) Int. Cl.: F24H 1/43, F24H 8/00

(54) **METHOD OF PRODUCING A HEAT EXCHANGER, AND HEAT EXCHANGER PRODUCED USING SUCH A METHOD**
VERFAHREN ZUR HERSTELLUNG EINES WÄRMETAUSCHERS UND ANHAND DIESES VERFAHRENS HERGESTELLTER WÄRMETAUSCHER
PROCÉDÉ DE FABRICATION D'UN ÉCHANGEUR DE CHALEUR ET ÉCHANGEUR DE CHALEUR FABRIQUÉ À L'AIDE D'UN TEL PROCÉDÉ

(30) Priority: 13.04.2010 IT MI20100625
(43) Date of publication of application: 20.02.2013
(73) Proprietor: Riello S.p.A., Legnago (IT)
(72) Inventor: BENZONI, Carlo, I-37045 Legnago (IT); CASIRAGHI, Stefano, I-23875 Osnago (IT)
(74) Representative: Bergadano, Mirko
(86) International application number: PCT/IB2011/000821
(87) International publication number: WO 2011/128764

(56) References cited:
- EP-A2- 1 143 206
- WO-A1-2004/090434
- WO-A1-2005/028966

## Description

### TECHNICAL FIELD

The present invention relates to a method of producing a condensation heat exchanger.

More specifically, the present invention relates to a method of producing a heat exchanger comprising a casing for conducting combustion fumes; and a hollow elongated member for conducting a liquid, normally water, and coiled about a given axis to form a number of adjacent turns and a gap of predetermined size between the adjacent turns. The coiled hollow elongated member is housed in the casing so as to come into contact with the combustion fumes or, more generally speaking, hot gases containing steam.

### BACKGROUND ART

Exchangers of the above type are designed to route the hot gases between the adjacent turns to optimize heat exchange between the hot gases and a liquid; to do which, the size and cross section shape of the hollow elongated member and the size of the gap between the adjacent turns are important design parameters.

Heat exchangers of the above type are known and designed for assembly in condensation boilers, significant examples of which are described in EP 1,627,190 B1; EP 1,600,708 A1; EP 1,750,070 A1; EP 1,750,069 A1; and EP 1,752,718 A1.

EP 1,627,190 B1 describes a heat exchanger production method comprising the steps of extruding a straight hollow elongated member; coiling the hollow elongated member about a given axis to form a number of adjacent turns; and fitting spacers between the adjacent turns. The turns and spacers are normally held together by ties extending parallel to the given axis, or by other retaining devices to maintain the designed size of the gap. WO 2004/036121 A1 actually illustrates a heat exchanger in which a coiled hollow elongated member is compressed by ties parallel to the coil axis. Without the ties, the coiled hollow elongated member would undergo strain induced both by the liquid flowing inside it, and by thermal variations. More specifically, the pressurized liquid flowing inside the coiled hollow elongated member produces a force which tends to part the turns and uncoil the hollow elongated member. This is known as the Bourdon effect and is commonly used in manometers. When the walls of the hollow elongated member are very thin, they may be deformed by the pressurized liquid, thus altering the size of the gap and the efficiency of the heat exchanger.

Manufacturing the heat exchanger therefore involves assembling numerous parts, and considerable cost in terms of both material and labour.

### DISCLOSURE OF THE INVENTION

It is an object of the present invention to provide a simple, low-cost method of producing a heat exchanger of the above type.

Another object of the present invention is to provide a method of producing a highly efficient heat exchanger comprising a small number of parts.

According to the present invention, there is provided a method of producing a heat exchanger comprising a casing for conducting combustion fumes; and a hollow elongated member for conducting a liquid, and coiled about an axis to form a number of adjacent turns and a gap of predetermined size between the adjacent turns, which are housed in the casing; the method comprising the steps of :
- coiling the hollow elongated member about the axis with such a coil pitch that the adjacent turns either contact one another or are spaced apart by a distance smaller than the predetermined size of the gap; and
- inserting spacers between the adjacent turns; said spacers being designed to define the predetermined size of the gap between the adjacent turns, and to be compressed between the adjacent turns by the elastic force of the coiled hollow elongated member.

By virtue of the present invention, the coiled hollow elongated member is made flexible, and performs like a coil spring : the spacers and the coil pitch in fact are designed to produce elastic deformation of the coiled hollow elongated member, which produces a preloading force when the spacers are positioned between the adjacent turns. The preloading force can be predetermined to a certain extent by appropriately selecting the coil pitch, the rigidity of the hollow elongated member, and the deformation induced by the spacers, and serves to counteract the Bourdon effect which tends to part the turns and alter the size of the gap between them.

In a preferred embodiment of the present invention, the hollow elongated member comprises a tube and longitudinal fins; the adjacent turns comprise facing fins; the step of inserting the spacers between the adjacent turns comprises the step of locally and permanently deforming portions of facing fins of the adjacent turns to form lips; and each spacer is defined by at least one lip of one deformed fin.

The heat exchanger thus has no ties or spacers separate from the hollow elongated member.

Another object of the present invention is to provide a heat exchanger designed to eliminate the drawbacks of known heat exchangers.

According to the present invention, there is provided a heat exchanger comprising a casing for conducting combustion fumes; and a hollow elongated member for conducting a liquid, and coiled about an axis to form a number of adjacent turns and a gap of predetermined size between the adjacent turns, which are housed in the casing; the heat exchanger being produced in accordance with any one of the foregoing Claims, so the coiled hollow elongated member exerts compression on the spacers.

### BRIEF DESCRIPTION OF THE DRAWINGS

A non-limiting embodiment of the present invention will be described by way of example with reference to the accompanying drawings, in which :
Figure 1 shows a partly exploded view in perspective of the heat exchanger according to the present invention;
Figure 2 shows a larger-scale, partly sectioned side view, with parts removed for clarity, of a hollow elongated member of the Figure 1 heat exchanger;
Figures 3 to 7 show details of the coiled hollow elongated member at successive stages in the heat exchanger production method according to the present invention.

### BEST MODE FOR CARRYING OUT THE INTENTION

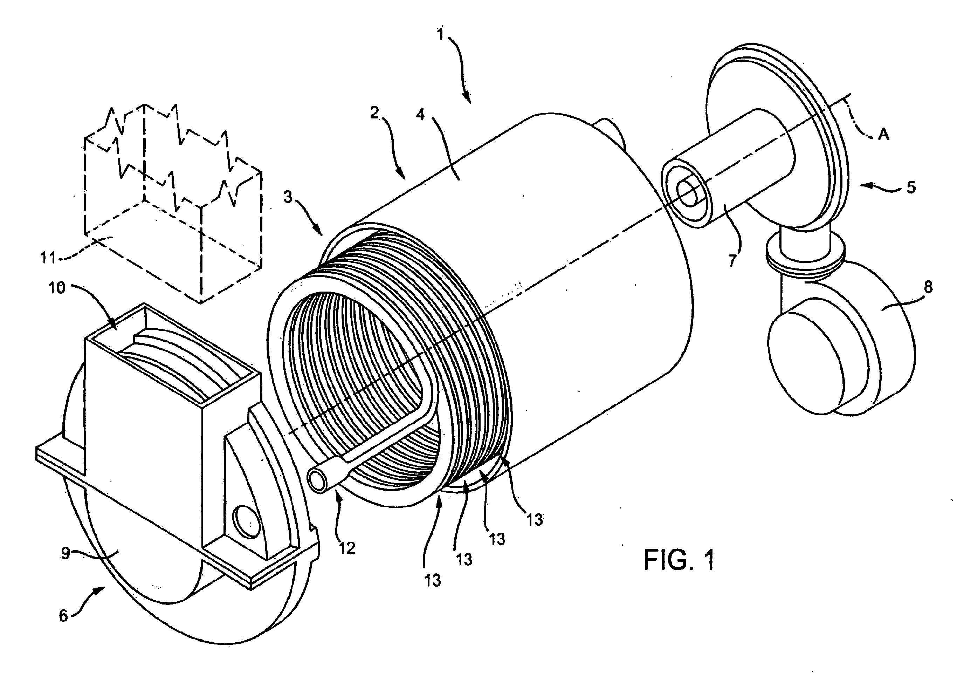

Number 1 in Figure 1 indicates as a whole a heat exchanger, which, in the example shown, is a condensation heat exchanger designed for assembly in a gas boiler, and comprises a cylindrical casing 2, and a hollow elongated member 3 coiled about an axis A and housed in casing 2.

Casing 2 comprises a cylindrical wall 4 made of metal, preferably aluminium, or polymer material; and two end walls 5 and 6 fitted to cylindrical wall 4 to form a combustion fume circulation chamber. In the example shown, end wall 5 is connected to a cylindrical burner 7 positioned, in use, inside the fume circulation chamber; and to a ventilator 8 for feeding combustion air to burner 7. And end wall 6 comprises a manifold 9 with an outlet 10 connectable to a flue 11.

Hollow elongated member 3 comprises two end connectors 12 (only one shown in Figure 1) for connecting it to the water circuit, and is substantially defined by a metal section defining one or more inner conduits, along which one or more liquids flow, and one of which may be lined.

Hollow elongated member 3 is coiled to form a gap between it and cylindrical wall 4, and forms a number of turns 13 spaced apart to form a gap allowing fumes to flow between adjacent turns 13. To promote fume flow between adjacent turns 13, plugs (not shown in the drawings) may be inserted to form a compulsory fume path inside the casing, as described for example in Patent EP 1,627,190 B1. The size, measured along axis A, of the gap is an important parameter for achieving efficient heat exchange, and is therefore determined beforehand.

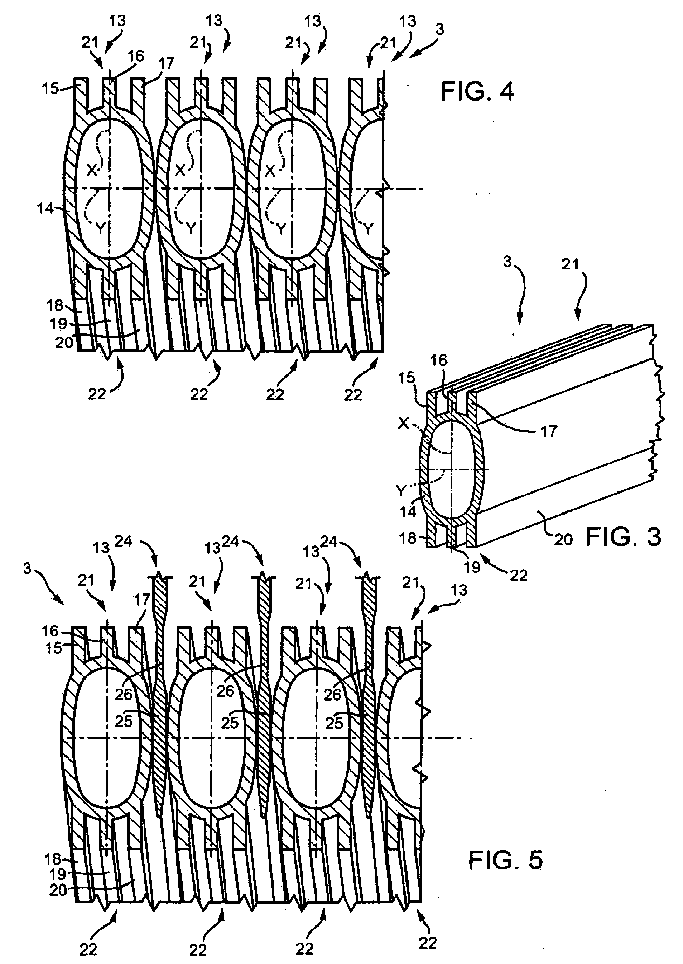

In the Figure 3 example, hollow elongated member 3, or rather the metal section, is extruded from aluminium or aluminium alloy; hollow elongated member 3 preferably comprises a tube 14, and six fins 15, 16, 17, 18, 19, 20 parallel to and extruded with tube 14; tube 14 is preferably elliptic or oval in cross section, with a major axis X and a minor axis Y; and fins 15, 16, 17, 18, 19, 20 are divided into two groups 21 and 22, of three fins each, located on opposite sides of axis Y.

The material and thickness of the walls of tube 14 and fins 15, 16, 17, 18, 19, 20 are selected to achieve a given rigidity of hollow elongated member 3, and make the coiled elongated member 3 self-supporting.

Hollow elongated member 3 is extruded straight, and then coiled, keeping minor axis Y substantially parallel to the coil axis A, as shown in Figure 4, so that group 21 of fins is located on the outside, and group 22 of fins on the inside of the coil.

With reference to Figure 4, group 21 comprises a fin 15 facing a fin 17 of one adjacent turn 13; a fin 17 facing a fin 15 of the other adjacent turn 13; and a fin 16 between fins 15 and 17. And group 22 comprises a fin 18 facing a fin 20 of one adjacent turn 13; a fin 20 facing a fin 18 of the other adjacent turn 13; and a fin 19 between fins 18 and 20.

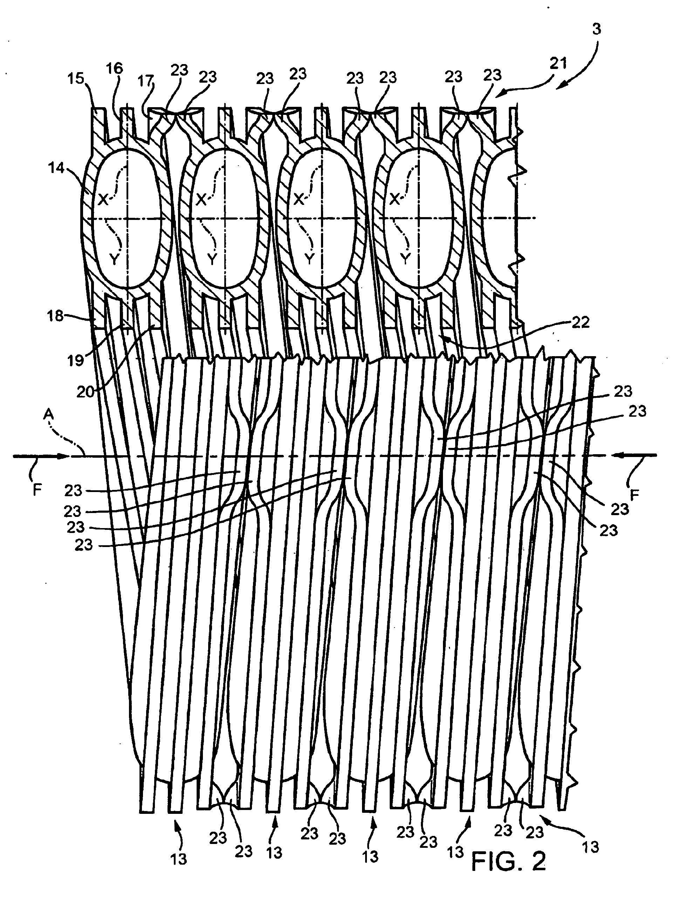

With reference to Figure 2, the facing fins 15 and 17 in group 21 are permanently deformed locally to form contacting lips 23, which act as spacers to form the gap between adjacent turns 13, are preferably formed at equal intervals, e.g. of 90°, about the coil axis A, and are maintained contacting each other by a preloading force F produced by the coiled hollow elongated member 3.

To form the Figure 2 coil, the straight hollow elongated member 3 in Figure 3 is coiled about axis A with such a pitch that the adjacent turns 13 either contact or are separated by a distance smaller than the size, i.e. project size, of the gap, as shown in Figure 4. The coiling operation may be performed on a calender or pipe-bending machine (not shown in the drawings). The next step comprises inserting spacers between adjacent turns 13. The spacers, which, in the example shown, are defined by lips 23 (Figure 2), are designed to form a gap of the predetermined size between adjacent turns 13, and to be compressed between adjacent turns 13 by the elastic force F exerted by the coiled hollow elongated member 3.

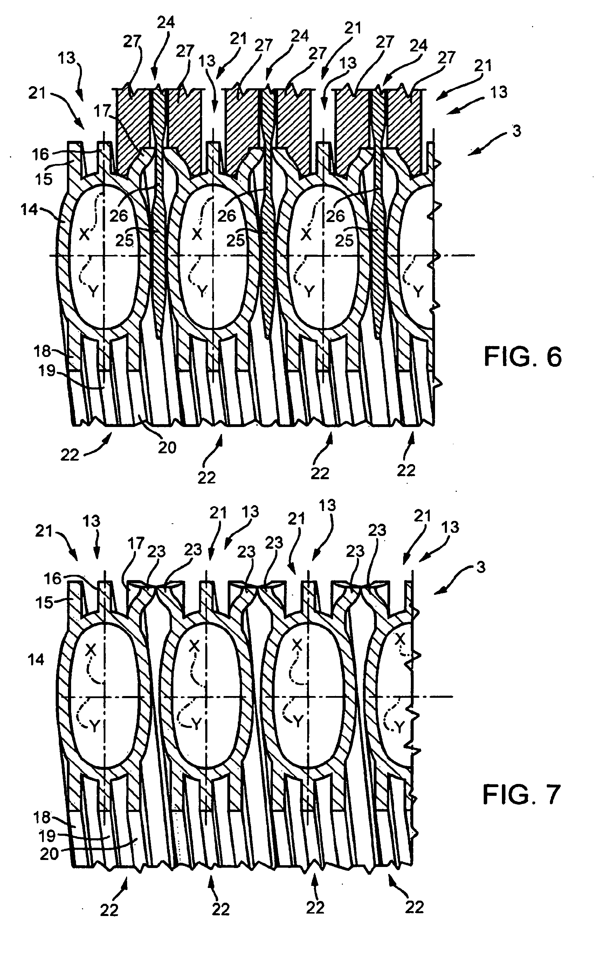

With reference to Figures 5 and 6, adjacent turns 13 are parted, parallel to axis A, within the elastic deformation range of coiled hollow elongated member 3 prior to insertion of the spacers, and are released (Figure 7), after insertion of the spacers, so springback of the coiled hollow elongated member 3 grips the spacers between adjacent turns 13.

With reference to Figure 5, adjacent turns 13 are parted by inserting parting bodies 24 designed to part adjacent turns 13 by a distance greater than the predetermined size of the gap, and which comprise blades inserted exactly where lips 23, i.e. the spacers, will be formed. Each parting body 24 comprises a portion 25, which is gripped between tube 14 of adjacent turns 13; and a portion 26, which is thinner than and connected to portion 25, and is inserted between fins 15 and 17 of adjacent turns 13.

With reference to Figure 6, fins 15 and 17 are permanently deformed locally onto portion 26 of parting body 24, to form lips 23, by means of jaws 27, which squeeze fins 15 and 17 onto portion 26 of parting body 24.

Parting bodies 24 are then withdrawn, so springback of the coiled hollow elongated member 3 brings lips 23 of adjacent turns 13 into contact with one another, as shown in Figure 7.

In the example shown, each spacer is defined by two contacting lips 23.

In variations not shown, the spacers may be defined by one lip of a deformed fin, or by elements external to the hollow elongated member and gripped between adjacent turns.

In a further variation not shown, the gap between the adjacent turns varies along the coil, i.e. the spacers are of different sizes.

Clearly, changes may be made to the method and heat exchanger as described herein without, however, departing from the scope of the accompanying Claims.

## Claims

1. A method of producing a heat exchanger comprising a casing (2) for conducting combustion fumes; and a hollow elongated member (3) for conducting a liquid, and coiled about an axis (A) to form a number of adjacent turns (13) and a gap of predetermined size between the adjacent turns (13), which are housed in the casing (2); **characterised in that** the method comprises the steps of :
- coiling the hollow elongated member (3) about the axis (A) with such a coil pitch that the adjacent turns (13) either contact one another or are spaced apart by a distance smaller than the predetermined size of the gap; and
- inserting spacers between the adjacent turns (13); said spacers being designed to define the predetermined size of the gap between the adjacent turns (13), and to be compressed between the adjacent turns (13) by the elastic force (F) of the coiled hollow elongated member (3).

2. A method as claimed in Claim 1, and comprising the step of parting the adjacent turns (13) in a direction parallel to the axis (A) and within the elastic deformation range of the coiled hollow elongated member (3), before inserting the spacers; and releasing the adjacent turns (13) after inserting the spacers between the adjacent turns (13), so springback of the coiled hollow elongated member (3) grips the spacers between the adjacent turns (13).

3. A method as claimed in any one of the foregoing Claims, wherein the hollow elongated member (3) comprises a tube (14) and longitudinal fins (15, 16, 17, 18, 19, 20); the adjacent turns (13) comprising facing fins (15, 17, 18, 20); the step of inserting the spacers between the adjacent turns (13) comprising the step of locally and permanently deforming portions of facing fins (15, 17) to form lips (23); and each spacer being defined by at least one lip (23) of one deformed fin (15, 17).

4. A method as claimed in Claim 3, wherein each spacer is defined by two lips (23) of respective deformed facing fins (15, 17).

5. A method as claimed in Claim 3 or 4, and comprising the step of inserting, between the adjacent turns (13), parting bodies (24) designed to part the adjacent turns (13) by a distance, measured along the axis (A), greater than the predetermined size of the gap.

6. A method as claimed in Claim 5, wherein each parting body (24) comprises a first portion (25), and a second portion (26) thinner than the first portion (25); the method comprising the steps of inserting the first portion (25) between the tubes (14) of two adjacent turns (13), and inserting the second portion (26) between two facing fins (15, 17) of two adjacent turns (13); deforming the fins (15, 17) onto the second portion (26) of the parting body (24) to form two facing lips (23); and extracting the parting body (24), so the two facing lips (23) are positioned contacting each other.

7. A heat exchanger comprising a casing (2) for conducting combustion fumes; and a hollow elongated member (3) for conducting a liquid, and coiled about an axis (A) to form a number of adjacent turns (13) and a gap of predetermined size between the adjacent turns (13), which are housed in the casing (2); the heat exchanger (1) being produced in accordance with any one of the foregoing Claims, so the coiled hollow elongated member (3) exerts compression on the spacers.

8. A heat exchanger as claimed in Claim 7, wherein the casing (2) is made at least partly of polymer material.

9. A heat exchanger as claimed in Claim 7 or 8, wherein the size of the gap varies along the coil; the spacers differing in height along the coil.

## Patentansprüche

1. Ein Verfahren zur Herstellung eines Wärmetauschers mit einem Gehäuse (2) zum Führen von Brenngasen; und einem hohlen, langgestreckten Teil (3) zum Führen einer Flüssigkeit; und um eine Achse A gewunden, um eine Anzahl von nebeneinander liegenden Windungen (13) und einen Spalt mit einer vorgegebenen Größe zwischen den nebeneinander liegenden Windungen (13) zu formen, welche von dem Gehäuse (2) aufgenommen werden; **dadurch gekennzeichnet, dass** das Verfahren die folgenden Schritte aufweist:
- Winden des hohlen, langgestreckten Teils (3) um die Achse (A) mit einer derartigen Spulenweite, dass die nebeneinander liegenden Windungen (13) entweder miteinander in Kontakt sind oder in einem Abstand zueinander angeordnet sind, der kleiner als die vorgegebene Größe des Spaltes ist; und
- Einsetzen von Abstandsstücken zwischen die nebeneinander liegenden Windungen (13); wobei die Abstandsstücke derart ausgebildet sind, dass sie die vorgegebene Größe des Spaltes zwischen den nebeneinander liegenden Windungen (13) festlegen, und zwischen den nebeneinander liegenden Windungen (13) durch die elastische aft F des gewundenen hohlen, langgestreckten Teils (3) zusammen gedrückt werden.

2. Ein Verfahren nach Anspruch 1, und aufweisend den Schritt des Teilens der nebeneinander liegenden Windungen (13) in eine parallel zu der Achse A verlaufende Richtung und innerhalb des elastischen Verformungsbereichs des gewundenen hohlen, elastischen Teils (3), vor dem Einsetzen der Abstandsstücke; und Freigeben der nebeneinander liegenden Windungen (13) nach dem Einsetzen der Abstandsstücke zwischen die nebeneinander liegenden Windungen (13), so dass die ückstellkraft des gewundenen hohlen, elastischen Teils (3) die Abstandsstücke zwischen den nebeneinander liegenden Windungen (13) greift.

3. Ein Verfahren nach einem der vorhergehenden Ansprüche, wobei das hohle, langgestreckte Teil (3) ein Rohr (14) und sich in Längsrichtung erstreckende Rippen (15, 16, 17, 18, 19, 20) aufweist; die nebeneinander liegenden Windungen (13) zugewandte Rippen (15, 17, 18, 20) aufweisen; der Schritt des Einsetzens der Abstandsstücke zwischen die nebeneinander liegenden Windungen (13) den Schritt des lokalen und permanenten Verformens von Abschnitten der zugewandten Rippen (15, 17) aufweist, um Ansätze (23) zu formen; und jedes Abstandsstück durch wenigstens einen Ansatz (23) von einer verformten Rippe (15, 17) festgelegt wird.

4. Ein Verfahren nach Anspruch 3, wobei jedes Abstandsstück durch zwei Rippen (23) von entsprechend deformierten zugewandten Rippen (15, 17) festgelegt wird.

5. Ein Verfahren nach Anspruch 3 oder 4, und aufweisend den Schritt des Einsetzens, zwischen den nebeneinander liegenden Windungen (13), von Trennkörpern (24), die derart ausgebildet sind, dass sie die nebeneinander liegenden Windungen (13) in einem Abstand trennen, der entlang der Achse (A) gemessen, größer als die vorgegebene Größe des Spaltes ist.

6. Ein Verfahren nach Anspruch 5, wobei jeder Trennkörper (24) einen ersten Abschnitt (25) und einen zweiten Abschnitt (26) aufweist, der dünner als der erste Abschnitt (25) ist; das Verfahren aufweist die Schritte des Einsetzens des ersten Abschnitts (25) zwischen die Rohre (14) von zwei nebeneinander liegenden Windungen (13), und des Einsetzens des zweiten Abschnitts (26) zwischen zwei zugewandten Rippen (15, 17) von zwei nebeneinander liegenden Windungen (13); des Verformens der Rippen (15, 17) auf dem zweiten Abschnitt (26) des Trennkörpers (24), um zwei zugewandte Ansätze (23) zu formen; und des Herausnehmens des Trennkörpers (24), so dass die zugewandten Rippen (23) in gegenseitigem Kontakt zueinander angeordnet sind.

7. Ein Wärmetauscher mit einem Gehäuse (2) zum Führen von Brenngasen; und einem hohlen, langgestreckten Teil (3) zum Führen einer Flüssigkeit, und um eine Achse (A) gewunden, um eine Anzahl von nebeneinander liegenden Windungen (13) und einen Spalt mit einer vorgegebenen Größe zwischen den nebeneinander liegenden Windungen (13) zu formen, welche von einem Gehäuse (2) aufgenommen werden; wobei der Wärmetauscher (1) nach einem der vorhergehenden Ansprüche hergestellt ist, so dass das gewundene hohle, langgestreckte Teil (3) eine Anpresskraft auf die Distanzstücke ausübt.

8. Ein Wärmetauscher nach Anspruch 7, wobei das Gehäuse (2) zumindest teilweise aus einem polymeren Material hergestellt ist.

9. Ein Wärmetauscher nach Anspruch 7 oder 8, wobei die Größe des Spaltes entlang der Spule variiert; und die Abstandsstücke in der Höhe entlang der Spule differieren.

## Revendications

1. Procédé de production d'un échangeur de chaleur comprenant un carter (2) pour conduire les fumées de combustion ; et un élément allongé creux (3) pour conduire un liquide, et enroulé autour d'un axe (A) pour former un certain nombre de spires (13) adjacentes et un espace de taille prédéfinie entre les spires (13) adjacentes, qui sont logées dans le carter (2) ; **caractérisé en ce que** le procédé comprend les étapes consistant à :
- enrouler l'élément allongé creux (3) autour de l'axe (A) avec un pas d'enroulement tel que les spires (13) adjacentes sont en contact les unes avec les autres ou sont espacées d'une distance inférieure à la taille prédéfinie de l'espace ; et
- insérer des écarteurs entre les spires (13) adjacentes ; lesdits écarteurs étant conçus pour délimiter la taille prédéfinie de l'espace entre les spires (13) adjacentes, et pour être comprimés entre les spires (13) adjacentes par la force élastique (F) de l'élément allongé creux (3) enroulé.

2. Procédé selon la revendication 1, et comprenant l'étape consistant à séparer les spires (13) adjacentes dans une direction parallèle à l'axe (A) et dans la plage de déformation élastique de l'élément allongé creux (3) enroulé, avant d'introduire les écarteurs ; et à libérer les spires (13) adjacentes après introduction des écarteurs entre les spires (13) adjacentes, ainsi le retour élastique de l'élément allongé creux (3) enroulé serre les écarteurs entre les spires (13) adjacentes.

3. Procédé selon l'une quelconque des revendications précédentes, dans lequel l'élément allongé creux (3) comprend un tube (14) et des ailettes longitudinales (15, 16, 17, 18, 19, 20) ; les spires (13) adjacentes comprenant des ailettes opposées (15, 17, 18, 20) ; l'étape d'introduction des écarteurs entre les spires (13) adjacentes comprenant l'étape consistant à déformer localement et de façon permanente des parties d'ailettes opposées (15, 17) de manière à former des lèvres (23) ; et chaque écarteur étant délimité par au moins une lèvre (23) d'une ailette (15, 17) déformée.

4. Procédé selon la revendication 3, dans lequel chaque écarteur est délimité par deux lèvres (23) d'ailettes (15, 17) opposées déformées respectives.

5. Procédé selon la revendication 3 ou 4, et comprenant l'étape consistant à introduire, entre les spires (13) adjacentes, des corps de séparation (24) conçus pour séparer les spires (13) adjacentes d'une distance, mesurée le long de l'axe (A), supérieure à la taille prédéfinie de l'espace.

6. Procédé selon la revendication 5, dans lequel chaque corps de séparation (24) comprend une première partie (25), et une seconde partie (26) plus mince que la première partie (25) ; le procédé comprenant les étapes consistant à introduire la première partie (25) entre les tubes (14) de deux spires (13) adjacentes, et à introduire la seconde partie (26) entre deux ailettes opposées (15, 17) de deux spires (13) adjacentes ; à déformer les ailettes (15, 17) sur la seconde partie (26) du corps de séparation (24) pour former deux lèvres (23) opposées ; et à extraire le corps de séparation (24), de sorte que les deux lèvres (23) opposées sont positionnées en contact l'une avec l'autre.

7. Échangeur de chaleur comprenant un carter (2) pour conduire les fumées de combustion ; et un élément allongé creux (3) pour conduire un liquide, et enroulé autour d'un axe (A) pour former un certain nombre de spires (13) adjacentes et un espace de taille prédéfinie entre les spires (13) adjacentes, qui sont logées dans le carter (2) ; l'échangeur de chaleur (1) étant produit conformément à l'une quelconque des revendications précédentes, ainsi l'élément allongé creux (3) enroulé exerce une compression sur les écarteurs.

8. Échangeur de chaleur selon la revendication 7, dans lequel le carter (2) est constitué au moins en partie d'un matériau polymère.

9. Échangeur de chaleur selon la revendication 7 ou 8, dans lequel la taille de l'espace varie le long de l'enroulement ; les écarteurs différant en hauteur le long de l'enroulement.
